# EUROPÄISCHE PATENTSCHRIFT

(11) **EP 3 082 381 B1**
(45) Veröffentlichungstag und Bekanntmachung des Hinweises auf die Patenterteilung: **13.05.2026**
(21) Anmeldenummer: 16165819.0
(22) Anmeldetag: 18.04.2016
(51) Int. Cl.: H05B 6/66, H05B 6/80

(54) **VORRICHTUNG ZUM ERWÄRMEN VON KUNSTSTOFFVORFORMLINGEN MITTELS MIKROWELLEN**
DEVICE FOR HEATING PLASTIC PRE-FORMS BY MICROWAVE
DISPOSITIF DE CHAUFFAGE D'EBAUCHES EN MATIERE SYNTHETIQUE AU MOYEN DE MICRO-ONDES

(30) Priorität: 17.04.2015 DE 102015105925
(43) Veröffentlichungstag der Anmeldung: 19.10.2016
(73) Patentinhaber: Krones AG, 93073 Neutraubling (DE)
(72) Erfinder: Kammerl, Martin, 93073 Neutraubling (DE); Kursawe, Andreas, 93073 Neutraubling (DE); Senn, Konrad, 93073 Neutraubling (DE); Zimmerer, Johann, 93073 Neutraubling (DE)
(74) Vertreter: Hannke Bittner & Partner mbB Regensburg

(56) Entgegenhaltungen:
- EP-A1- 2 743 057
- EP-A2- 0 252 889
- WO-A1-99/54033
- DE-A1- 102008 039 375
- DE-A1- 102010 055 188
- US-A1- 2012 061 384

## Beschreibung

Die vorliegende Erfindung bezieht sich auf eine Vorrichtung und ein Verfahren zum Erwärmen von Kunststoffvorformlingen. Derartige Vorrichtungen sind aus dem Stand der Technik seit längerem bekannt. Dabei werden üblicherweise Kunststoffvorformlinge in einen Resonator bewegt und innerhalb dieses Resonators durch Beaufschlagung mit Mikrowellen erwärmt. Die so erwärmten Kunststoffvorformlinge werden anschließend weitertransportiert, beispielsweise an eine Streckblasmaschine, um so durch Beaufschlagung mit Druckluft zu Kunststoffbehältnissen, insbesondere Kunststoffflaschen, expandiert zu werden.

In jüngerer Zeit ist man dazu übergegangen, neben oder anstelle von Infrarotstrahlung Mikrowellen zur Erwärmung der Kunststoffvorformlinge einzusetzen. Dabei weisen üblicherweise die im Stand der Technik bekannten Mikrowellenerwärmungseinrichtungen eine Vielzahl von Erwärmungsstationen auf, welche jeweils voneinander unabhängige Aggregate sind. Zur Erwärmung der Kunststoffvorformlinge mittels Mikrowellen werden dabei in der Regel mehrere Einzelprozessstationen parallel betrieben, wobei diese Einzelprozessstationen gleich aufgebaut sind und auch unabhängig voneinander betrieben werden können. Zur Erzeugung der Mikrowellenstrahlung sind dabei mehrere Vorrichtungs-Teile vorgesehen, wie insbesondere ein Hochspannungsgenerator, ein Magnetron, ein Hohlleiter zur Übertragung der Mikrowellen und ein Applikator bzw. Resonator, innerhalb dessen die Mikrowellen auf die Kunststoffvorformlinge aufgebracht werden. Der Mikrowellengenerator weist dabei üblicherweise Funktionsgruppen wie einen Gleichrichter und eine Hochspannungskaskade auf. Diese Hochspannungskaskade erzeugt dabei aus Gleichspannung eine Hochspannung. Damit wird üblicherweise zunächst eine Netzspannung gleichgerichtet und anschließend mittels der besagten Hochspannungskaskade wiederum Hochspannung erzeugt. Damit sind in jeder einzelnen Station die nötigen Komponenten, wie der Generator, das Magnetron, der Hohlleiter und der Applikator mit jeweils kleiner Leistung verbaut und werden parallel betrieben. Auf diese Weise ist eine hohe Anzahl an Funktionsgruppen nötig wodurch einerseits die Kosten erhöht werden und andererseits die Ergebnisse teilweise nicht zufriedenstellend sind.

Vorrichtungen zum Erwärmen von Objekten mittels Mikrowellen sind dabei beispielsweise aus DE 10 2010 055 188 A1, DE 10 2008 039 375 A1, US 2012/061384 A1, EP 0 252 889, WO 99/54033 A1 oder EP 2 743 057 A1 bekannt.

Der vorliegenden Erfindung liegt daher die Aufgabe zu Grunde, bei derartigen Erwärmungseinrichtungen die Kosten zu reduzieren und gegebenenfalls auch die Zuverlässigkeit der Anlage zu erhöhen. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Erwärmen von Kunststoffvorformlingen weist eine Vielzahl von Resonatoreinheiten auf, in welche jeweils Kunststoffvorformlinge zu deren Erwärmung einführbar sind. Weiterhin weist die Vorrichtung eine zentrale Mikrowellenerzeugungseinheit zum Erzeugen von Mikrowellen auf sowie eine Zuführungseinrichtung, um die von der zentralen

Mikrowellenerzeugungseinheit erzeugten Mikrowellen wenigstens einer Resonatoreinheit zuzuführen. Weiterhin weist die Vorrichtung wenigstens eine zentrale Gleichrichtereinheit zur Bereitstellung einer gleichgerichteten Spannung auf.

Erfindungsgemäß stellt die zentrale Gleichrichtereinheit Spannung zum Betrieb wenigstens zweier Resonatoreinheiten zur Verfügung. Dabei stellt diese zentrale Gleichrichtereinheit die gesamte Spannung zum Betrieb zur Verfügung.

Es wird daher im Rahmen der Erfindung vorgeschlagen, dass eine bestimmte Einheit der Erfindung, nämlich eine zentrale Gleichrichtereinheit, welche die Netzspannung gleichrichtet, zum Betrieb mehrerer Resonatoreinheiten vorgesehen ist. Unter einer gleichgerichteten Spannung wird dabei nicht notwendigerweise eine vollständig gleichgerichtete und geglättete Spannung verstanden, es kann auch ausreichend sein, wenn die gleichgerichtete Spannung zumindest im Vergleich zu einer Wechselspannung bzw. der Netzspannung gleichgerichtet ist, wobei hiervon auch eventuelle Schwankungen der Spannung umfasst sein können.

Da in der oben beschriebenen Zuführungseinrichtung, welche die Mikrowellen den Resonatoreinheiten zuführt, kann es insbesondere um einen Hohlleiter handeln, in den beispielsweise von einer Mikrowellenerzeugungseinheit, wie etwa einem Magnetron, Mikrowellen eingespeist werden, und welcher diese Mikrowellen weiter an den Resonator leitet. Vorteilhaft ist jeder Resonatoreinheit wenigstens ein und bevorzugt genau ein Hohlleiter zugeordnet. Es wäre dabei möglich, dass an und/oder in diesem Hohlleiter wenigstens ein Tuningelement angeordnet ist, etwa ein Tuningstift, der in diesen Hohlleiter einschiebbar ist, um auf diese Weise die Leistung zu regulieren.

Erfindungsgemäß wird der Gleichrichterteil eines Mikrowellengenerators aus den einzelnen Mikrowellengeneratoren entfernt und dafür die Gleichspannung zentral erzeugt. Auf diese Weise kann ein gemeinsamer Zwischenkreis zur Versorgung mehrerer Resonatoreinheiten vorgesehen sein. Dabei ist es sowohl möglich, dass die Gleichrichtereinheit stationär angeordnet ist und so die gleichgerichtete Spannung zu der beweglichen Resonatoreinheit (genauer, zu der Hochspannungserzegungseinheit und von dieser auf die Mikrowellenerzegungseinheit und von dieser wiederum auf die Resonatoreinheit) übertragen wird, beispielsweise mittels eines Schleifrings.

Es wäre jedoch auch möglich, dass die Gleichrichtereinheit an einem sich bewegenden, beispielsweise drehenden Teil angeordnet ist. In diesem Falle wird die der Gleichrichtereinheit zuzuführende Netzspannung über den Schleifring übertragen.

Falls wie erwähnt die Gleichrichtereinheit stehend bzw. stationär angeordnet ist, ist es möglich, dass die gleichgerichtete Spannung bzw. die Zwischenkreisspannung über einen Schleifring auf ein bewegliches beispielsweise drehendes Teil übertragen wird. Allgemein ist es denkbar, dass die einzelnen Resonatoreinheiten beweglich ausgeführt sind, beispielsweise auf einem beweglichen und insbesondere drehbaren Träger angeordnet sind. Erfindungsgemäß sind die Resonatoreinheiten selbst stationär angeordnet und die einzelnen Kunststoffvorformlinge werden jeweils durch stationäre Resonatoreinheiten geschoben werden und dabei erwärmt.

Durch die Verwendung einer zentralen Gleichrichtereinheit kann Bauraum gespart und die Herstellungskosten der einzelnen Stationen verringert werden. Dabei ist es möglich, dass eine Gleichrichtereinheit wenigstens zwei Resonatoreinheiten versorgt, es wäre jedoch auch möglich, dass eine Gleichrichtereinheit mehrere und beispielsweise auch alle vorhandenen Resonatoreinheiten mit Gleichspannung versorgt.

Je nach Maschinenkonzept kann die zentrale Gleichrichtereinheit bzw. deren Leistung kleiner gewählt werden als die Summe der verbauten Stationsleistungen. Falls nicht alle Resonatoreinheiten bzw. Stationen gleichzeitig betrieben werden, muss nur die Leistung im Zwischenkreis zur Verfügung gestellt werden, welche der Anzahl der gleichzeitig zu betreibenden Mikrowellenstationen entspricht. Falls beispielsweise ein Rundläufer mit 270° Behandlungswinkel vorgesehen ist, muss nur 75% der verbauten (summierten) Stationsleistung in dem Zwischenkreis zur Verfügung stehen.

Die Generatoren der einzelnen Stationen wandeln die Zwischenkreisspannung in Hochspannung um, die dann an die Mikrowellenerzeugungseinrichtung, beispielsweise das Magnetron geleitet wird. Das Magnetron erzeugt die Mikrowellenstrahlung, die bevorzugt über den oben erwähnten Mikrowellenleiter bzw. die Zuführungseinrichtung in den Applikator d.h. den Resonator und von diesem auf die Kunststoffvorformlinge übertragen wird.

Bei einer weiteren vorteilhaften Ausführungsform weist die Vorrichtung eine Transporteinrichtung (auch als Bewegungseinrichtung bezeichnet) zum Einführen der Kunststoffvorformlinge in die Resonatoreinheiten und/oder zum Ausführen der Kunststoffvorformlinge aus den Resonatoreinheiten auf.

Dabei ist es möglich, dass diese Transporteinrichtung die Kunststoffvorformlinge entlang ihrer Längsrichtung in den Resonator einschiebt. Es wäre jedoch auch ein Bewegen der Kunststoffvorformlinge senkrecht zu deren Längsrichtung zum Einführen in den Resonator denkbar. Dabei ist es möglich, dass die Transporteinrichtung die Kunststoffvorformlinge in einer Richtung in den Resonator einführt und in der entgegengesetzten Richtung wieder aus dem Resonator herauszieht.

Erfindungsgemäß ist in den Resonatoreinrichtungen jeweils eine Bodenreflektoreinrichtung vorgesehen, welche Mikrowellenstrahlung auf die Bodenbereiche der Kunststoffvorformlinge reflektiert.

Daneben ist es auch möglich, dass die Transporteinrichtung eine Dreheinrichtung aufweist, welche eine Drehung der Kunststoffvorformlinge um deren Längsachse bewirkt. Auf diese Weise ist eine gleichförmige Erwärmung der Kunststoffvorformlinge bezüglich deren Umfangsrichtung möglich. Dabei ist es möglich, dass diese Dreheinrichtung die Kunststoffvorformlinge mit Geschwindigkeiten dreht, die beispielsweise zwischen 20 und 200 U/min liegt.

Erfindungsgemäß weist die Vorrichtung eine zentralle Hochspannungsquelle (auch als Hochspannungserzeugungseinheit bezeichnet) zum Erzeugen von Hochspannung bzw. zum Betrieb eines Erzeugers von Hochspannung auf. Erfindungsgemäß wird diese zentrale Hochspannungsquelle von der zentralen Gleichrichtereinheit mit Spannung versorgt. Auf diese Weise wird zunächst die Netzspannung gleichgerichtet und/oder geglättet und die so erzeugte gleichgerichtete Spannung wird in der Hochspannungserzeugungseinrichtung in Hochspannung umgesetzt. Genauer gesagt wird die gleichgerichtete Spannung der Hochspannungserzeugungseinrichtung zugeführt, wobei die gleichgerichtete Spannung zunächst in eine hochfrequente Wechselspannung umgewandelt wird und diese hochfrequente Wechselspannung anschließend hochtransformiert wird.

Allgemein ist es daher möglich, dass die Hochspannungserzeugungseinheit modular aufgebaut ist und ein erstes Modul aufweist, welches aus einer Gleichspannung bzw. einer im Wesentlichen gleichgerichteten Spannung (d.h. einer Spannung, welche noch bestimmte "Rippel" aufweisen kann) zunächst eine hochfrequente Wechselspannung erzeugt, sowie ein zweites Modul, welches diese hochfrequente Wechselspannung in eine (ebenfalls hochfrequente) Hochspannung umsetzt.

Erfindungsgemäß stellt die zentrale Hochspannungsquelle Hochspannung zum Betrieb wenigstens zweier Resonatoreinheiten zur Verfügung. Erfindungsgemäß ist nicht nur die Gleichrichtereinheit zentral angeordnet bzw. mehrere Resonatoreinheiten versorgt, sondern auch die Hochspannungsversorgung. Damit ist erfindungsgemäß ein gemeinsamer Hochspannungsgenerator vorgesehen. Die Gleichrichtereinheit sowie der Hochspannungserzeuger werden hier zentral bereitgestellt und deren Ausgang auf die Mikrowellenquellen der einzelnen Stationen verteilt. Die Hochspannungserzeugung kann bei Rundläufern sowohl im drehenden als auch im stehenden Teil verbaut werden. Im ersten Fall wird die Netzspannung über einen Schleifring übertragen, im letzten Fall die Hochspannung.

Es wäre auch denkbar, dass die Hochspannungserzeugungseinheit teilweise zentral ausgestaltet ist. So könnte eine zentrale Hochfrequenzerzeugungseinheit vorgesehen sein, die eine hochfrequente Spannung erzeugt und anschließend eine Vielzahl von Transformationseinheiten versorgt, welche die hochfrequente Spannung hochtransformieren und so in (hochfrequente) Hochspannung umsetzen.

Die Hochspannung wird bevorzugt in einzelnen Mikrowellenerzeugungseinrichtungen, beispielsweise Magnetrons, über geeignete Schalteinrichtungen zu- oder weggeschaltet bzw. auch der Stromfluss zu den einzelnen Magnetrons über geeignete Bauteile am Magnetron geregelt. Im letzteren Fall stellt die Hochspannungsquelle bevorzugt einen stabilisierten Hochspannungskreis bereit, von dem dann über Stromsteller den einzelnen Magnetrons definiert Leistung zugeführt wird.

Bei einer weiteren vorteilhaften Ausführungsform weist die Vorrichtung daher eine Steuerungseinrichtung auf, welche die Zuführung der Hochspannung an die einzelnen Mikrowellenerzeugungseinrichtungen steuert. Diese Steuerungseinrichtung kann dabei die Zuführung der Hochspannung auch in Abhängigkeit von einer Drehstellung eines Trägers, an dem die einzelnen Resonatoreinheiten angeordnet sind, steuern bzw. regeln. Auch kann die Steuerung und/oder Regelung in Abhängigkeit von einer Relativposition des Kunststoffvorformlings gegenüber der Resonatoreinheit erfolgen. So kann beispielsweise die betreffende Resonatoreinheit abgeschaltet werden, solange sich in dieser kein Kunststoffvorformling befindet.

Auch durch die Verwendung einer zentralen Hochspannungserzeugungseinheit können Bauraum sowie die Herstellungskosten der einzelnen Stationen verringert werden. Auch hier ist es möglich, dass je nach dem Maschinenkonzept die zentrale Hochspannungsversorgungseinrichtung kleiner gewählt wird als die Summe der verbauten Stationsleistungen. Falls nicht alle Stationen gleichzeitig betrieben werden, ist es auch denkbar, dass nur diejenige Leistung durch die Hochspannungserzeugungseinrichtung zur Verfügung gestellt wird, welche der Anzahl der gleichzeitig betriebenen Mikrowellenstationen bzw. Mikrowellenerzeugungseinrichtungen entspricht. Auch hier wäre es beispielsweise wiederum bei einem Rundläufer mit 270° Behandlungswinkel möglich, nur 75% der verbauten Stationsleistung als Hochspannung zur Verfügung zu stellen.

Auch hier können die Mikrowellenerzeugungseinrichtungen für einzelne Stationen aus der bereitgestellten Hochspannung Mikrowellenstrahlung erzeugen, die über einen Mikrowellenleiter in den Applikator und von diesen auf die Kunststoffvorformlinge übertragen wird.

Auch die Hochspannungserzeugungseinheit kann stationär oder beweglich angeordnet sein.

Bei einer weiteren vorteilhaften Ausführungsform erzeugt wenigstens eine Mikrowellenerzeugungseinrichtung Mikrowellen zum Betrieb wenigstens zweier Resonatoreinheiten. Erfindungsgemäß sind nicht nur ein gemeinsamer Gleichrichter und eine gemeinsame Hochspannungsversorgungseinrichtung vorgesehen, sondern auch ein gemeinsamer Mikrowellenerzeuger, dessen Leistung bzw. dessen Mikrowellen auf mehrere Resonatoreinheiten aufgeteilt werden. Damit sind sowohl die Gleichrichtereinheit, die Hochspannungserzeugungseinrichtung und die Mikrowellenerzeugungseinrichtung zentral aufgebaut und die Mikrowellenstrahlung wird auf die einzelnen Stationen verteilt.

Wie oben erwähnt, kann dabei die Hochspannungserzeugungseinrichtung bei Rundläufern am stehenden wie auch am drehenden Teil verbaut sein. Im ersteren Fall wird die Hochspannung über den Schleifring übertragen im letzteren Fall die Netzspannung. Bevorzugt ist die zentrale Mikrowellenerzeugungseinrichtung beweglich und insbesondere gemeinsam mit den Resonatoreinheiten beweglich angeordnet. Die zentrale Mikrowellenerzeugungseinrichtung erzeugt aus der Hochspannung die Mikrowellenleistung für die gesamte Anlage. Über geeignete Schalteinrichtungen wird die Mikrowellenstrahlung den einzelnen Stationen zu- oder weggeschaltet. Durch die Verwendung einer zentralen Mikrowellenerzeugungseinheit kann wiederum Bauraum und können auch die Herstellungskosten der einzelnen Stationen verringert werden.

Je nach Maschinenkonzept kann auch die zentrale Mikrowellenerzeugungseinrichtung kleiner gewählt werden als die Summe der verbauten Stationsleistung. Falls nicht alle Stationen gleichzeitig betrieben werden, muss nur die Leistung durch die Mikrowellenerzeugungseinrichtung zur Verfügung gestellt werden, die der Anzahl der gleichzeitig zu betreibenden Mikrowellenstationen entspricht. Ein Rundläufer mit 270° Behandlungswinkel muss nur 75% der verbauten Stationsleistung als Hochspannung zur Verfügung stellen können.

Den einzelnen Stationen wird Mikrowellenstrahlung bereitgestellt, die über einen Mikrowellenleiter in den Applikator und von diesen in die Kunststoffvorformlinge übertragen wird.

Bei einer weiteren vorteilhaften Ausführungsform weist die Vorrichtung eine Transporteinrichtung auf, welche die Resonatoreinheiten entlang eines vorgegebenen Transportpfads transportiert. Vorteilhaft handelt es sich hierbei um einen kreisförmigen Transortpfad. Bei einer weiteren vorteilhaften Ausführungsform weist die Transporteinrichtung einen drehbaren Träger auf. An diesem Träger sind bevorzugt die einzelnen Resonatoreinheiten angeordnet.

Bei einer weiteren vorteilhaften Ausführungsform ist jeder Resonatoreinheit eine der oben beschriebenen Bewegungseinrichtungen zugeordnet, welche das Einführen der Kunststoffvorformlinge in die Resonatoreinheit bewerkstelligt. Diese Bewegungseinrichtung kann dabei einen elektromotorischen Antrieb und insbesondere einen Linearmotor aufweisen, der die Bewegung der Kunststoffvorformlinge gegenüber den Resonatoreinheiten bewirkt.

Bei einer weiteren vorteilhaften Ausführungsform weist die Vorrichtung eine Zuführeinrichtung auf, um den einzelnen Transporteinrichtungen zum Transportieren der Kunststoffvorformlinge diese Kunststoffvorformlinge zuzuführen. Dabei können die einzelnen Vorrichtungen zum Zuführen der Kunststoffvorformlinge in die Resonatoreinheiten jeweils Eingriffselemente aufweisen, welche in der Lage sind, diese Kunststoffvorformlinge zu halten. Bei diesen Eingriffselementen kann es sich beispielsweise um Haltedorne handeln, welche in Mündungen der Kunststoffvorformlinge eingeführt werden.

Bei einer weiteren vorteilhaften Ausführungsform ist wenigstens eine Mikrowellenerzeugungseinheit aus einer Gruppe von Mikrowellenerzeugungseinheiten ausgewählt, welche Magnetrons, Klystrons oder Festkörperquellen enthält. Ein Klystron ist vereinfacht ausgedrückt eine Elektronenröhre, welche die Laufzeit der Elektronen zur Erzeugung und Verstärkung von Hochfrequenzstrahlen ausnutzt. In einem Klystron bewirkt eine Hochspannung auf einem beschleunigten Elektronenstrom eine Geschwindigkeitsmodulation. Zu diesem Zweck durchläuft dieser Elektronenstrom einen mit einem Hochfrequenzsignal gespeisten Hohlraumresonator. Nach einer gewissen Laufzeit bewirkt die Geschwindigkeitsmodulation eine Dichtemodulation. Der modulierte Elektronenstrom kann durch einen oder mehrere weitere Hohlraumresonatoren geführt werden und an dem letzten Resonator kann ein Teil seiner Energie als Hochfrequenzenergie entnommen werden.

Die vorliegende Erfindung ist weiterhin auf ein Verfahren zum Erwärmen von Kunststoffvorformlingen gerichtet. Dabei werden die Kunststoffvorformlinge in Resonatoreinheiten eingeführt und innerhalb dieser Resonatoreinheiten durch Beaufschlagung mit Mikrowellen erwärmt.

Bei einem weiteren bevorzugten Verfahren versorgt die zentrale Gleichrichtereinheit die zentrale Hochfrequenzquelle mit Spannung und diese zentrale Hochspannungsquelle versorgt wiederum wenigstens zwei Resonatoreinheiten und bevorzugt mehrere Resonatoreinheiten.

Weitere Vorteile und Ausführungsformen ergeben sich aus den beigefügten Zeichnungen:
Darin zeigen:
- Fig. 1: Eine Vorrichtung nach dem Stand der Technik;
- Fig. 2: eine Vorrichtung in einer ersten Ausführungsform
- Fig. 3: eine Vorrichtung in einer zweiten Ausführungsform; und
- Fig. 4: eine erfindungsgemäße Vorrichtung.

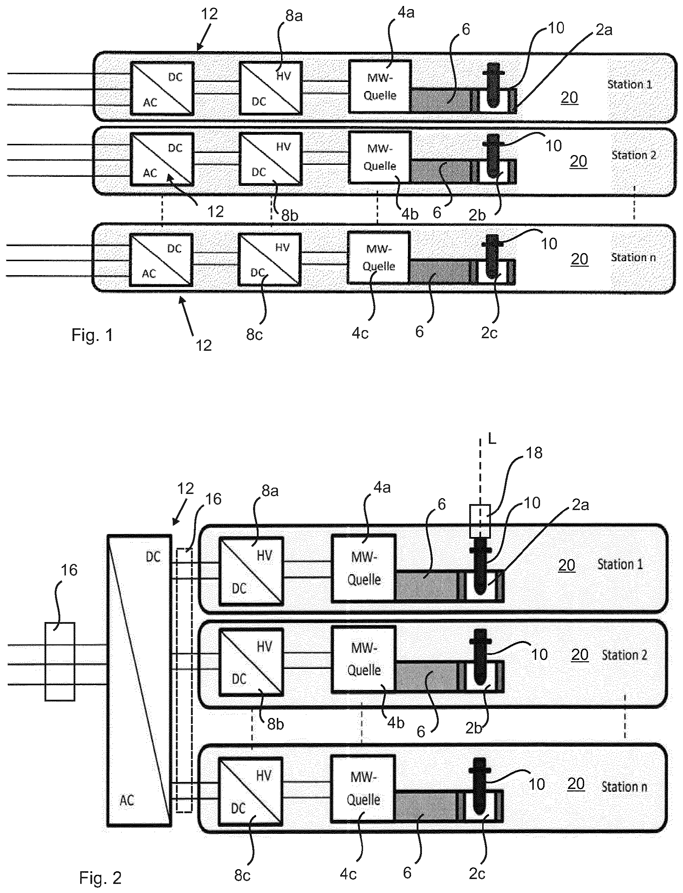

Figur 1 zeigt schematisch eine Vorrichtung 1 zum Erwärmen von Kunststoffvorformlingen 10. Dabei sind hier insgesamt n Stationen 20 vorgesehen, welche jeweils separat aufgebaut sind. Jede einzelne Station weist dabei eine Resonatoreinheit 2a, 2b, 2c auf, der jeweils von Mikrowellenerzeugungseinrichtungen 4a, 4b, 4c über Hohlleiter 6 mit Mikrowellen versorgt wird. Bevorzugt sind dabei diese Resonatoreinheiten beweglich angeordnet. Die einzelnen Stationen 20 können (wie auch bei den unten diskutierten Ausführungsformen) auf einem gemeinsamen Träger, insbesondere einem drehbaren Träger (nicht gezeigt) angeordnet sein.

Das Bezugszeichen 12 bezieht sich auf eine Gleichrichtereinheit, welche Netzspannung (AC) gleichrichtet (DC). Diese gleichgerichtete Spannung wird jeweils Hochspannungsquellen bzw. Hochspannungserzeugungseinheiten 8a, 8b, 8c zugeführt und diese erzeugen wiederrum Hochspannung HV. Diese Hochspannung wird den einzelnen Mikrowellenerzeugungseinrichtungen 4a, 4b, 4c übermittelt bzw. zugeführt.

Figur 2 zeigt eine erste Ausführungsform einer Vorrichtung. Anstelle der in der Figur 1 gezeigten drei getrennten Gleichrichtereinheiten ist hier nur eine Gleichrichtereinheit 12 vorgesehen, die hier sämtliche Hochspannungserzeugungseinrichtungen 8a, 8b und 8c mit Hochspannung versorgt. Dabei ist es möglich, dass die Gleichrichtereinheit stationär angeordnet ist, sodass deren Ausgangsspannung über Drehverteiler (etwa einen Schleifring) den einzelnen Hochspannungsquellen 8a, 8b, 8c zugeführt wird. Das Bezugszeichen 16 bezieht sich auf einen entsprechenden Drehverteiler. Man erkennt, dass hier zwei Positionen dieses Drehverteilers denkbar sind.

Die Kunststoffvorformlinge werden entlang ihrer Längsrichtung L in die Resonatoreinheiten 2a, 2b, 2c eingeschoben und auch wieder entlang dieser Längsrichtung L aus den Resonatoreinheiten ausgeführt. Das Bezugszeichen 18 kennzeichnet eine Bewegungseinrichtung, welche diese Bewegung der Kunststoffvorformlinge 10 entlang deren Längsrichtung L bewirkt. Dabei ist es bevorzugt, dass jede Station 20 eine derartige Bewegungseinrichtung 18 (etwa in Form eines Linearmotors) aufweist. Damit lässt sich die Bewegung der Kunststoffvorformlinge 10 gegenüber den Resonatoreinheiten 2a, 2b, 2c individuell für die einzelnen Stationen steuern. Daneben können, wie oben erwähnt, die Kunststoffvorformlinge 10 auch um diese Längsrichtung L gedreht werden.

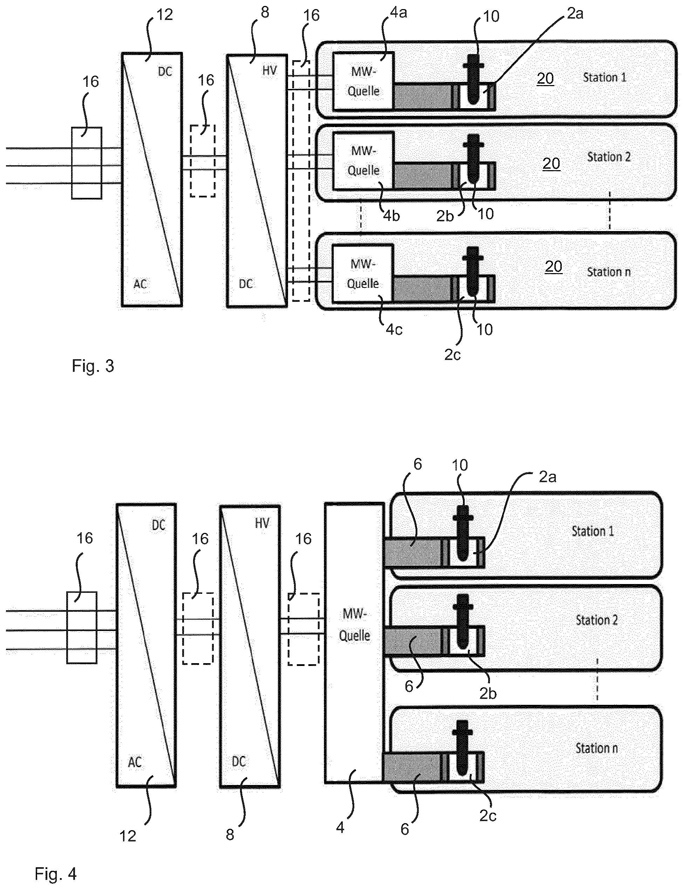

Figur 3 zeigt eine weitere Ausführungsform einer Vorrichtung. Bei dieser Ausführungsform ist nicht nur eine zentrale Gleichrichtereinheit vorgesehen, sondern auch eine zentrale Hochspannungsquelle. Diese zentrale Hochspannungsquelle versorgt die einzelnen Mikrowellenerzeugungseinrichtungen 4a, 4b, 4c jeweils mit Hochspannung. Bei dieser Ausgestaltung wären insgesamt drei Positionen eines Drehverteilers 16 denkbar, wobei zwei dieser Positionen jeweils durch das gestrichelte Rechteck dargestellt sind. Damit könnten sowohl alle gezeigten Aggregate auf dem drehenden Teil angeordnet sein, es wäre jedoch auch denkbar, dass die Gleichrichtereinheit 12 zentral und stationär angeordnet ist sowie auch die Hochspannungsquelle 8.

Figur 4 zeigt eine Ausgestaltung der erfindungsgemäßen Vorrichtung. Erfindungsgemäß sind sowohl eine zentrale Gleichrichtereinheit als auch eine zentrale Hochspannungsversorgungseinrichtung als auch eine zentrale Mikrowellenerzeugungseinrichtung vorgesehen. Diese zentrale Mikrowellenerzeugungseinrichtung erzeugt Mikrowellen, die über mehrere Hohlleiter 6 jeweils auf die einzelnen Resonatoren 2a, 2b und 2c aufgeteilt werden. Das Bezugszeichen 16 gibt wieder die möglichen Positionen der Drehverteiler an. Dabei wäre es auch hier denkbar, dass die Hochspannungserzeugungseinrichtung und die Mikrowellenerzeugungseinrichtung sowohl stationär als auch beweglich bzw. drehbar angeordnet sind.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung zum Erwärmen von Kunststoffvorformlingen
- 2 a, b, c: Resonatoreinheiten
- 4 a, b, c: Mikrowellenerzeugungseinheit
- 6: Zuführungseinrichtung, Hohlleiter
- 8 a, b, c: Hochspannungserzeugungseinheit
- 10: Kunststoffvorformling
- 12: Gleichrichtereinheit
- 16: Drehverteiler
- 18: Bewegungseinrichtung
- 20: Station
- L: Längsrichtung

## Patentansprüche

1. Vorrichtung (1) zum Erwärmen von Kunststoffvorformlingen (10) mit einer Vielzahl von Resonatoreinheiten (2a, 2b, 2c), in welche jeweils Kunststoffvorformlinge (10) zu deren Erwärmung einführbar sind, mit einer zentralen Mikrowellenerzeugungseinheit (4) zum Erzeugen von Mikrowellen und mit wenigstens einer Zuführungseinrichtung (6) um die von der zentralen Mikrowellenerzeugungseinheit (4) erzeugten Mikrowellen wenigstens einer Resonatoreinheit (2a, 2b, 2c) zuzuführen,
**dadurch gekennzeichnet, dass**
eine zentrale Gleichrichtereinheit (12) zur Bereitstellung einer gleichgerichteten Spannung und eine zentrale Hochspannungsquelle (8) vorgesehen sind und die zentrale Gleichrichtereinheit (12) und die zentrale Hochspannungsquelle (8) Spannung zum Betrieb wenigstens zweier Resonatoreinheiten (2a, 2b, 2c) zur Verfügung stellen, dass die Resonatoreinheiten (2a, 2b, 2c) selbst stationär angeordnet sind und die einzelnen Kunststoffvorformlinge (10) jeweils durch die stationären Resonatoreinheiten (2a, 2b, 2c) geschoben werden und dabei erwärmt werden, und dass in den Resonatoreinrichtungen (2a, 2b, 2c) jeweils eine Bodenreflektoreinrichtung vorgesehen ist, welche Mikrowellenstrahlung auf Bodenbereiche der Kunststoffvorformlinge (10) reflektiert.

2. Vorrichtung (1) nach Anspruch 1,
**dadurch gekennzeichnet, dass**
die Vorrichtung (1) eine Transporteinrichtung (18) zum Einführen der Kunststoffvorformlinge (10) in die Resonatoreinheiten (2a, 2b, 2c) und/oder zum Ausführen der Kunststoffvorformlinge (10) aus den Resonatoreinheiten (2a, 2b, 2c) aufweist.

3. Vorrichtung (1) nach Anspruch 1,
**dadurch gekennzeichnet, dass**
die zentrale Hochspannungsquelle (8) einen Erzeuger von hochfrequenter Spannung betreibt.

4. Vorrichtung (1) nach wenigstens einem der vorangegangenen Ansprüche,
**dadurch gekennzeichnet, dass**
die Vorrichtung (1) wenigstens eine Transporteinrichtung aufweist, welche die Resonatoreinheiten (2a, 2b, 2c) entlang eines vorgegebenen Transportpfades transportiert.

5. Vorrichtung (1) nach wenigstens einem der vorangegangenen Ansprüche,
**dadurch gekennzeichnet, dass**
die zentrale Mikrowellenerzeugungseinheit (4) aus einer Gruppe von Mikrowellenerzeugungseinheiten ausgewählt ist, welche Magnetrons, Klystrons oder Festkörperquellen enthält.

6. Verfahren zum Erwärmen von Kunststoffvorformlingen (10) wobei die Kunststoffvorformlinge (10) in Resonatoreinheiten (2a, 2b, 2c) eingeführt und innerhalb dieser Resonatoreinheiten (2a, 2b, 2c) durch Beaufschlagung mit Mikrowellen erwärmt werden, wobei diese Mikrowellen mittels einer zentralen Mikrowellenerzeugungseinheit (4) erzeugt werden,
**dadurch gekennzeichnet, dass**
eine zentrale Gleichrichtereinheit (12), welche eine gleichgerichtete Spannung zum Betrieb der zentralen Mikrowellenerzeugungseinheit (4) zur Verfügung stellt, und eine zentrale Hochspannungsquelle (8) vorgesehen sind und die zentrale Gleichrichtereinheit (12) und die zentrale Hochspannungsquelle (8) Spannung zum Betrieb wenigstens zweier Resonatoreinheiten zur Verfügung stellen, dass die Resonatoreinheiten (2a, 2b, 2c) selbst stationär angeordnet sind und die einzelnen Kunststoffvorformlinge (10) jeweils durch die stationären Resonatoreinheiten (2a, 2b, 2c) geschoben werden und dabei erwärmt werden, und dass in den Resonatoreinrichtungen (2a, 2b, 2c) jeweils eine Bodenreflektoreinrichtung vorgesehen ist, welche Mikrowellenstrahlung auf Bodenbereiche der Kunststoffvorformlinge (10) reflektiert.

7. Verfahren nach Anspruch 6,
**dadurch gekennzeichnet, dass**
die zentrale Gleichrichtereinheit (12) die zentrale Hochspannungsquelle (8) mit Spannung versorgt und die zentrale Hochspannungserzeugungseinheit (8a, 8b, 8c) wenigstens zwei Resonatoreinheiten (2a, 2b, 2c) versorgt.

## Claims

1. Apparatus (1) for heating plastic preforms (10), having a plurality of resonator units (2a, 2b, 2c), into which in each case plastic preforms (10) can be introduced in order to heat the latter, having at least one central microwave generating unit (4) for generating microwaves, and having at least one supply device (6) for supplying to at least one resonator unit (2a, 2b, 2c) the microwaves generated by the central microwave generating unit (4),
**characterized in that**
a central rectifier unit (12) is provided for providing a rectified voltage and a central high-voltage source is provided and the central rectifier unit (12) and the central high-voltage source provide voltage for operating at least two resonator units (2a, 2b, 2c), that the resonator units (2a, 2b, 2c) itself are arranged stationary and the individual plastic preforms (10) are pushed through the stationary resonator units (2a, 2b, 2c) and are heated thereby, and that at least one bottom reflector device is provided in the resonator units (2a, 2b, 2c), which reflects microwave radiation onto bottom regions of the plastic preforms (10).

2. Apparatus (1) according to claim 1,
**characterized in that**
the apparatus (1) has a transport device (18) for introducing the plastic preforms (10) into the resonator units (2a, 2b, 2c) and/or for taking the plastic preforms (10) out of the resonator units (2a, 2b, 2c).

3. Apparatus (1) according to at least one of the preceding claims,
**characterized in that**
the high-voltage source (8) operates a generator of high frequency voltage.

4. Apparatus (1) according to at least one of the preceding claims,
**characterized in that**
the apparatus (1) has at least one transport device which transports the resonator units (2a, 2b, 2c) along a predefined transport path.

5. Apparatus (1) according to at least one of the preceding claims,
**characterized in that**
the central microwave generating unit (4) is selected from a group of microwave generating units which includes magnetrons, klystrons or solid-state sources.

6. Method for heating plastic preforms (10), wherein the plastic preforms (10) are introduced into resonator units (2a, 2b, 2c) and are heated within these resonator units (2a, 2b, 2c) through the application of microwaves, wherein these microwaves are generated by a central microwave generating unit (4),
**characterized in that**
a central rectifier unit (12) provides a rectified voltage for operating a central microwave generating unit (4), and a central high-voltage source is provided and the central rectifier unit (12) and the central high-voltage source provide voltage for operating at least two resonator units (2a, 2b, 2c), that the resonator units (2a, 2b, 2c) itself are arranged stationary and the individual plastic preforms (10) are pushed through the stationary resonator units (2a, 2b, 2c) and are heated thereby, and that at least one bottom reflector device is provided in the resonator units (2a, 2b, 2c), which reflects microwave radiation onto bottom regions of the plastic preforms (10).

7. Method according to claim 6,
**characterized in that**
the central rectifier unit (12) supplies the central high-voltage generating unit (8a, 8b, 8c) with voltage and the central high-voltage generating unit (8a, 8b, 8c) supplies at least two resonator units (2a, 2b, 2c).

## Revendications

1. Dispositif (1) pour chauffer des préformes en matière plastique (10) avec une pluralité d'unités de résonateur (2a, 2b, 2c), dans lesquelles des préformes en matière plastique (10) peuvent être introduites pour leur chauffage, avec une unité centrale de génération de micro-ondes (4) pour générer des micro-ondes et avec au moins un système d'amenée (6) pour amener les micro-ondes générées par l'unité centrale de génération de micro-ondes (4) à au moins une unité de résonateur (2a, 2b, 2c),
**caractérisé en ce que**
une unité centrale de redresseur (12) destinée à fournir une tension redressée et une source centrale de haute tension (8) sont prévues et l'unité centrale de redresseur (12) et la source centrale de haute tension (8) fournissent une tension pour le fonctionnement d'au moins deux unités de résonateur (2a, 2b, 2c), que les unités de résonateur (2a, 2b, 2c) sont elles-mêmes disposées de manière stationnaire et les préformes en matière plastique (10) individuelles sont chacune poussées par les unités de résonateur (2a, 2b, 2c) stationnaires et sont chauffées, et qu'un système réflecteur de fond est prévu dans les systèmes résonateurs (2a, 2b, 2c), lequel réfléchit le rayonnement micro-ondes sur les zones de fond des préformes en matière plastique (10).

2. Dispositif (1) selon la revendication 1,
**caractérisé en ce que**
le dispositif (1) présente un système de transport (18) pour l'introduction des préformes en matière plastique (10) dans les unités de résonateur (2a, 2b, 2c) et/ou pour l'évacuation des préformes en matière plastique (10) des unités de résonateur (2a, 2b, 2c).

3. Dispositif (1) selon la revendication 1,
**caractérisé en ce que**
la source centrale de haute tension (8) fait fonctionner un générateur de tension à haute fréquence.

4. Dispositif (1) selon au moins l'une quelconque des revendications précédentes,
**caractérisé en ce que**
le dispositif (1) présente au moins un système de transport qui transporte les unités de résonateur (2a, 2b, 2c) le long d'un trajet de transport prédéfini.

5. Dispositif (1) selon au moins l'une quelconque des revendications précédentes,
**caractérisé en ce que**
l'unité centrale de génération de micro-ondes (4) est choisie parmi un groupe d'unités de génération de micro-ondes, qui contient des magnétrons, des klystrons ou des sources solides.

6. Procédé de chauffage de préformes en matière plastique (10), dans lequel les préformes en matière plastique (10) sont introduites dans des unités de résonateur (2a, 2b, 2c) et sont chauffées au sein desdites unités de résonateur (2a, 2b, 2c) par exposition à des micro-ondes, dans lequel lesdites micro-ondes sont générées au moyen d'une unité centrale de génération de micro-ondes (4),
**caractérisé en ce que**
une unité centrale de redresseur (12), qui met à disposition une tension redressée pour le fonctionnement de l'unité centrale de génération de micro-ondes (4), et une source centrale de haute tension (8) sont prévues et l'unité centrale de redresseur (12) et la source centrale de haute tension (8) mettent à disposition une tension pour le fonctionnement d'au moins deux unités de résonateur, que les unités de résonateur (2a, 2b, 2c) sont elles-mêmes disposées de manière stationnaire et les préformes en matière plastique (10) individuelles sont poussées respectivement par les unités de résonateur (2a, 2b, 2c) stationnaires et sont chauffées ce faisant, et qu'un système réflecteur de fond est prévu respectivement dans les systèmes résonateurs (2a, 2b, 2c), lequel réfléchit le rayonnement micro-ondes sur des zones de fond des préformes en matière plastique (10).

7. Procédé selon la revendication 6,
**caractérisé en ce que**
l'unité centrale de redresseur (12) alimente en tension la source centrale de haute tension (8) et l'unité centrale de génération de haute tension (8a, 8b, 8c) alimente au moins deux unités de résonateur (2a, 2b, 2c).
